# NEW EUROPEAN PATENT SPECIFICATION

(11) **EP 1 694 762 B2**
(45) Date of publication and mention of the opposition decision: **09.05.2012**
(45) Mention of the grant of the patent: 04.06.2008
(21) Application number: 04812199.0
(22) Date of filing: 24.11.2004
(51) Int. Cl.: C08K 5/5313, C01B 13/32, C01G 23/053, B01J 13/00

(54) **FLAME RETARDANT POLYMER COMPOSITIONS AND METHODS FOR MAKING THE SAME**
FLAMMWIDRIGE POLYMERZUSAMMENSETZUNGEN UND HERSTELLUNGSVERFAHREN DAFÜR
COMPOSITIONS A BASE DE POLYMERES ANTI-FEU ET LEURS PROCEDES DE FABRICATION

(30) Priority: 25.11.2003 US 723812
(43) Date of publication of application: 30.08.2006
(73) Proprietor: The Boeing Company, Chicago, IL 60606-1596 (US)
(72) Inventor: WARREN, Leslie, F., Jr., , (US); TAM, Yan, S., Oak Park, CA 91377 (US)
(74) Representative: Hayes, Adrian Chetwynd
(86) International application number: PCT/US2004/039630
(87) International publication number: WO 2005/052051

(56) References cited:
- EP-A2- 1 016 623
- CA-C- 1 318 453
- US-A- 4 078 016
- US-A- 4 087 403
- US-A- 4 208 322
- US-A- 4 778 176
- US-A- 5 962 608
- US-A- 6 096 914
- US-A- 6 159 600
- DATABASE CA [Online] CHEMICAL ABSTRACTS SERVICE, COLUMBUS, OHIO, US; MEHRING, MICHAEL ET AL: "New Sol-Gel Routes to Organic-Inorganic Hybrid Materials: Modification of Metal Alkoxide by Phosphonic or Phosphinic Acids" XP002319422 retrieved from STN Database accession no. 2002:815032 -& JOURNAL OF SOL-GEL SCIENCE AND TECHNOLOGY , 26(1/2/3), 99-102 CODEN: JSGTEC; ISSN: 0928-0707, 2003, XP002319421
- JOURNAL OF SOL-GEL SCIENCE AND TECHNOLOGY 26 2003, pages 98 - 102
- JEAN BROSSAS: 'Retardateurs de flammes' TECHNIQUES DE L'INGÉNIEUR, TRAITÉ PLASTIQUES ET COMPOSITES 10 January 1999,

## Description

### TECHNICAL FIELD

The present invention generally relates to polymer compositions, and more particularly relates to polymer compositions exhibiting flame retardant properties.

### BACKGROUND

Flame retardant materials, also known as fire retardant materials, are materials that provide an increased resistance to ignition. Accordingly, flame retardant materials may delaying the spread of a flame and/or reduce the possibility of starting or sustaining a fire. Flame retardant polymer materials are desirable for many applications, including the aeronautics and aerospace industries, the automotive industry, and the residential and commercial construction industries. Polymer materials that exhibit flame retardant properties may be used to manufacture products such as aircraft and aerospace insulation, aircraft parts, fire-retardant automobiles and automobile parts, housing and building materials, home interior products, clothing and other household products.

A known approach for improving the flame retardant properties of polymers includes the addition to the polymers of additives, such as halogen-, phosphorous-, and aluminum-containing additives, that are known to increase the fire resistance of the polymers. These conventional additives generally are physically dispersed within the polymer structure but do not become part of the polymer structure. One problem with these additives is that typically the additives are combined with the polymer in relatively large amounts, that is, not less than fifteen percent (15%) by weight, to impart fire retardant properties to the polymer. Such large amounts of additives in the polymers tend to adversely affect the mechanical properties of the polymers. Another problem with these conventional additives is that the additives may leach from the polymer. Not only does this reduce the flame retardant properties of the polymer, but such leaching may cause environmental hazards. For example, some additives, such as certain brominated additives, can be carcinogenic. In addition, other conventional additives may cause excessive smoking when the polymer is ignited. Excessive smoking may be particularly undesirable in confined spaces, such as in aircraft cabins.

Accordingly, it is desirable to provide a process for making a homogeneous fire retardant polymer composition. Furthermore, other desirable features and characteristics of the present invention will become apparent from the subsequent detailed description and the appended claims, taken in conjunction with the accompanying drawings and the foregoing technical field and background.

### BRIEF SUMMARY

According to the present invention, there is provided a process for making a flame retardant polymer composition. The process comprises the step of contacting a metal oxide precursor with a source of organophosphinate anions to form a phosphinate-chelated metal oxide precursor. The phosphinate-chelated metal oxide precursor is contacted with a polymer material and is at least partially hydrolyzed to form at least partially hydrolyzed phosphinate-chelated metal oxide precursor monomers. The at least partially hydrolyzed phosphinate-chelated metal oxide precursor monomers are permitted to polycondense to form a phosphorous-containing metal oxide sol. The process further comprises at least one of polymerizing and solidifying the polymer material.

### DETAILED DESCRIPTION

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

The various embodiments of the present invention relate to the fabrication of a homogeneous fire retardant polymer composition. The homogeneous fire retardant polymer composition may be made using a polymer material and a stable phosphorous-containing metal oxide sol that imparts to the resulting polymer composition fire retardant properties. A "sol", as the term is used herein, refers to a composition comprising a liquid colloidal dispersion containing a liquid phase and a dispersed phase. Use of the metal oxide sol of the various embodiments of the present invention results in phosphorous-containing nano-sized particles, comprising the dispersed phase of the sol, that are uniformly distributed throughout the polymer composition. Without being bound by theory, it is believed that the phosphorous-containing dispersed phase of the metal oxide sol interacts integrally with the polymer material to form a stable molecular network. The phosphorous-containing dispersed phase of the metal oxide sol also imparts flame retardant properties to the polymer composition without compromising the mechanical properties of the polymer composition.

As used herein, the term "polymer material" of the various embodiments of the present invention may comprise any conventional polymer or polymer precursor. The polymer material may be any material that comprises or is capable of forming a pre-polymer material, a partially polymerized material or a polymer. The polymer material may be monomers, a B-staged polymer, or a polymer. In one exemplary embodiment of the present invention, the polymer material may be a curable resin, including a light or UV curable resin, such as acrylics, methacrylates, and unsaturated polyesters. In another exemplary embodiment of the present invention, the polymer material is at least one thermosetting resin that can be cured by means of external energy such as heat, light or electron beam to form at least a partially three dimensional cured product. In another embodiment, the polymer material is at least one thermoplastic resin that can be solidified after transformation into a liquid or partially liquid state. In yet another embodiment, the polymer material is a mixture containing at least one thermoplastic resin and at least one thermosetting resin.

In another exemplary embodiment of the present invention, the polymer material is at least one of an acrylic resin, an unsaturated polyester resin, a saturated polyester resin, an alkyd resin, a vinyl ester resin, a polyurethane resin, an epoxy resin, a phenol resin, an urea-aldehyde resin, a polyvinyl aromatic, a maleimide resin, a polyvinyl halide resin, a polyolefin, a polyorganosiloxane, an amino resin, a polyamide, a polyimide, a polyetherimide, a polyphenylene sulfide resin, an aromatic polysulfone, a polyamideimide, a polyesterimide, a polyesteramideimide, a polyvinyl acetal, a fluorinated polymer, a polycarbonate and the like. A description of the above polymer materials can be found in U.S. Patent No. 5,962,608, issued October 5, 1999 to Ryang et al.

As described above, the various embodiments of the present invention utilize a stable metal oxide sol to fabricate a homogeneous fire retardant polymer composition. The liquid phase of the metal oxide sol may be aqueous and/or organic, and in particular, may be water and/or organic liquids such as alcohols, glycols and other protic organic solvents. Organic solvents include, but are not limited to, methanol, ethanol, propanol, isopropanol, sec-butanol, t-butanol, methoxyethanol, ethoxyethoxyethanol, ethylene glycol and propylene glycol. The liquid phase also may be a liquid or partially liquid substance to which a metal oxide sol can be added, such as resin monomers. For example, in the case where it is desired to incorporate metal oxide sols into a curable resin, the liquid phase of the metal oxide sols may comprise one embodiment of a polymer material such as curable resin monomers in liquid form.

The dispersed phase of the liquid colloidal dispersion comprises a polycondensation product of an at least partially hydrolyzed phosphinate-chelated metal oxide precursor monomers. The polycondensation product of the at least partially hydrolyzed phosphinate-chelated metal oxide precursor monomers are nano-sized clusters ("nano-clusters") that generally have an amorphous shape, although in some embodiments a somewhat symmetrical shape is obtained. In one embodiment, the nano-clusters of the at least partially hydrolyzed phosphinate-chelated metal oxide precursor monomers have an average size (the size is the average diameter of a nano-cluster) of less than 1000 nm, preferably less than 100 nm. It will be appreciated that some nano-clusters have a size larger than 1000 nm, as the average size refers to calculating the average of a random sample of nano-cluster diameters, each diameter to be averaged itself representing the average diameter of a generally amorphous nano-cluster in the random sample.

In general, a metal oxide sol in accordance with the present invention can be produced by contacting a metal oxide precursor with organophosphinate anions. The organophosphinate anions contain at least one mono-anionic chelating functional group that coordinates with the metal oxide precursor to form a phosphinate-chelated metal oxide precursor. The phosphinate-chelated metal oxide precursor is at least partially hydrolyzed by a hydrolyzing agent, for example, by contact with water, to provide a phosphorous-containing metal oxide sol.

The metal oxide precursors of the present invention include metal organic compounds and inorganic salts. Metal organic compounds include metal alkoxides and metal carboxylates. Metal alkoxides and metal carboxylates include metal methoxides, metal ethoxides, metal isopropoxides, metal propoxides, metal butoxides, metal ethylhexoxides, metal (triethanoloaminato)isopropoxides, metal bis(ammonium lacto)dihydroxides, metal bis(ethyl acetoacetato)diisopropoxides, metal bis(2,4-pentanedionate)diisopropoxides, metal acetates, metal ethylhexanoates, metal gluconates, metal oxalates, metal propionates, metal pantothenates, metal cyclohexanebutyrates, metal trifluoroacetylacetonates, metal citrates, and metal methacrylates. Inorganic salts include metal halides and metal nitrates.

The metal of the metal oxide precursors includes transition metals, alkaline earth metals and metallic elements of Groups 3A, 4A and 5A of the periodic table of elements, and combinations thereof. Transition metals include Sc, Ti, V, Cr, Mn, Fe, Co, Ni, Cu, Zn, Y, Zr, Nb, Mo, Tc, Ru, Th, Pd, Ag, Cd, Ba, La, Hf, Ta, W, Re, Os, Ir, Pt, Au, Hg and Ac. Alkaline earth metals include Be, Mg, Ca, Sr and Ba. Group 3A metallic elements include B, Al, Ga, In and Tl. Group 4A metallic elements include Ge, Sn and Pb. Group 5A metallic elements include As, Sb and Bi. In a preferred embodiment of the invention, the metal of the metal oxide precursors is at least one of aluminum, antimony, bismuth, calcium, chromium, magnesium, tin, titanium, zinc, and zirconium.

Metal oxide precursors include at least one of transition metal alkoxides, alkali metal alkoxides, alkaline earth metal alkoxides, Groups 3A, 4A and 5A alkoxides, transition metal carboxylates, alkali metal carboxylates, alkaline earth metal carboxylates, Groups 3A, 4A and 5A carboxylates, transition metal halides, alkali metal halides alkaline earth metal halides, Groups 3A, 4A and 5A halides, transition metal nitrates, alkali metal nitrates, alkaline earth metal nitrates and Groups 3A, 4A and 5A nitrates. Preferred metal oxide precursors include metal organic compounds and inorganic salts of Groups 3A and 4B of the periodic table of elements such as aluminum alkoxides, aluminum halides, titanium alkoxides, titanium halides, zirconium alkoxides, and zirconium halides. It will be appreciated, however, that the metal oxide precursor may be selected for optimum compatibility with the polymer material selected to form the fire retardant polymer composition of the present invention.

Specific examples of metal oxide precursors include aluminum triethoxide, aluminum isopropoxide, aluminum sec-butoxide, aluminum tri-t-butoxide, aluminum lactate, aluminum nitrate, aluminum chloride, aluminum bromide, antimony butoxide, antimony ethoxide, bismuth t-pentoxide, calcium ethylhexanoate, calcium methoxyethoxide, magnesium methoxide, magnesium ethoxide, tin bis(acetylacetonate)dibromide, tin bis(acetylacetonate)dichloride, titanium methoxide, titanium ethoxide, titanium isopropoxide, tin ethoxide tin methoxide, titanium propoxide, titanium butoxide, titanium ethylhexoxide, titanium (triethanolaminoto)isopropoxide, titanium bis(ammonium lacto)dihydroxide, titanium bis(ethyl acetoacetato)diisopropoxide, titanium bis(2,4-pentanedionate)diisopropoxide, titanium chloride, titanium bromide, zinc methoxyethoxide, zirconium ethoxide, zirconium isopropoxide, zirconium propoxide, zirconium sec-butoxide, zirconium t-butoxide, zirconium chloride, zirconium bromide, and combinations of two or more of the above compounds.

The organophosphinate anion can be any phosphinate anion have the general formula: 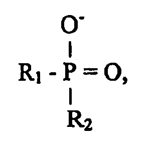 where R₁ and R₂ can be any alkyl, aryl, alkoxy or aryloxy moiety. Suitable sources of the organophosphinate anions include any mono-anionic phosphinic acid or mono-anionic phosphinic salts, preferably any suitable mono-anionic phosphinic acid. In a preferred embodiment of the invention, the mono-anionic phosphinic acid is diphenylphosphinic acid. The oxygen atoms that are bonded to the phosphorous atom of the organophosphinate anion provide the chelating functional group that coordinates to (reacts with) the metal of the metal oxide precursor in such a way to form a coordinated or chelated metal oxide complex that can prevent gelation of the sol by retarding, preventing or partially preventing hydrolysis and/or condensation.

The R₁ and R₂ groups of the organophosphinate anion do not substantially interact or bond with the metal oxide precursor. Rather, in one embodiment of the invention, the R₁ and/or R₂ groups may comprise or otherwise be bonded to or associated with a constituent or moiety that also contributes to the flame retardant properties of the resulting metal oxide sol. For example, the source of organophosphinate anions may be a material such as (bis-4-bromophenyl) phosphinic acid or other similar bromine- or boron-containing phosphinic acid or other similar material that exhibits flame retardant properties. In another embodiment of the invention, the R₁ and/or R₂ groups may interact with a polymerizable material with which the metal oxide sols are subsequently combined. In other words, these groups may be capable of reacting, interacting or bonding with a polymer material, a polymerizable material, or polymer substituent to make the phosphinate-chelated metal oxide precursor more suitably compatible with the polymer material, polymerizable material, or polymer substituent. Alternatively, it is possible that the phosphorous atom of the organophosphinate anion may interact with the polymerizable material to make the phosphinate-chelated metal oxide precursor more suitably compatible with the polymer material. Good compatibility of the metal oxide sol and the polymer material results in a polymer nano-composite in which the at least partially hydrolyzed phosphinate-chelated metal oxide precursor is uniformly distributed in the resultant polymer at a molecular level.

The metal oxide sol can be prepared in accordance with the following procedure. A metal oxide precursor is contacted with at least one source of organophosphinate anions. In a preferred embodiment, the metal oxide precursor is provided in an appropriate amount of solvent, preferably in an organic solvent such as an alcohol or glycol solvent. In another embodiment, the metal oxide precursor is provided in the polymer material in which the subsequently formed metal oxide sol will be incorporated. For example, if the metal oxide sols are to be incorporated into a curable resin system, the metal oxide precursor can be provided in the monomers of the uncured resin.

The metal oxide precursor is contacted with the organophosphinate anions at a temperature suitable to permit the organophosphinate anions to coordinate with the metal oxide precursor. In one embodiment, the temperature is from 0° to 100°C, but preferably about 50°C. The metal oxide precursor also may be contacted with other chelating agents that may contribute to the flame retardant properties of the resulting metal oxide sol. Such chelating agents may include, for example, dibromohydroquinone and other similar compounds.

Subsequent to treatment with the phosphinate anions, the phosphinate-chelated metal oxide precursor is at least partially hydrolyzed by contact with a hydrolyzing agent. That is, unchelated atoms, groups or sites that are directly or indirectly connected to the metal atom of the chelated metal oxide precursor are hydrolyzed thereby providing a monomer of an at least partially hydrolyzed, phosphinate-chelated metal oxide precursor. The chelated atoms or groups are generally not hydrolyzed, although a small fraction of the chelated groups may be hydrolyzed in some instances. In one embodiment, the temperature at which the phosphinate-chelated metal oxide precursor is at least partially hydrolyzed is from 0° to 50°C, but preferably about room temperature.

Hydrolysis may be carried out by contacting the phosphinate-chelated metal oxide precursor with a hydrolyzing agent such as water, and preferably de-ionized water. The hydrolyzing agent converts the unchelated atoms or groups to hydroxyl groups. In one embodiment the molar ratio of the chelated metal oxide precursor to water is 1:0.1 to 1:3. In another embodiment, the phosphinate-chelated metal oxide precursor is contacted with a hydrolyzing agent in a solvent and preferably an organic solvent. In a further embodiment, the phosphinate-chelated metal oxide precursor is contacted with a hydrolyzing agent in resin monomers and/or other ingredients, such as a solvent. In this connection, the metal oxide sols can also be prepared in resin monomers without a solvent, or in the absence of a non-reactive element, such as a non-reactive diluent.

The at least partially hydrolyzed, phosphinate-chelated metal oxide precursors are reactive monomers. Once formed, the monomers of the at least partially hydrolyzed phosphinate-chelated metal oxide precursor proceed to form the metal oxide sol of the invention by limited polycondensation. Since the monomers are partially chelated, the polycondensation is controlled whereby nano-clusters of several monomers are formed. That is, since polycondensation is controlled, the nano-clusters do not agglomerate and/or aggregate into gel form. Polycondensation may be controlled by varying the amount of hydrolyzing agent used. The resultant metal oxide sols are stable. Thus, once made, the metal oxide sols can be stored as a colloidal dispersion for an extended period of time. It is believed that this is because the nano-clusters tend not to agglomerate.

The amount of metal oxide sol used with a particular polymer material is determined by processability and performance of the prepolymer mixture and by the viscosity requirements, and mechanical, electrical, and thermal properties, and other concerns of the resultant polymer made with the metal oxide sol. The maximum amount used may be determined, however, in a practical respect by the desired mechanical and chemical parameters, such as the desired flame retardancy, of the resultant polymer. In one embodiment, the amount of polymer material that may be combined with a phosphorous-containing metal oxide sol to make a prepolymer mixture is from 30% to 99.9% by weight. In another embodiment, the amount of polymerizable material that may be combined with a phosphorous-containing metal oxide sol to make a prepolymer mixture is from 60% to 99.5% by weight. The metal oxide sol may be formed after a metal oxide sol precursor, such as the metal oxide precursor, has been contacted with a suitable polymer material.

In another exemplary embodiment of the present invention, additional ingredients may be added to the polymer composition prior to or after polymerization and/or solidifying to enhance or alter its physical or chemical properties. For example, while the above-described polymer composition has been formulated to exhibit suitable flame retardant properties, at least one flame retardant additive also may be added to the polymer composition. Suitable flame retardant additives that are commercially available may be used. Preferably, the flame retardant additive is one suitable for a particular application and compatible with the other components of an embodiment of the flame retardant polymer composition of the present invention. The selection of the flame retardant additive for any particular application varies on the balance of physical properties, appearance and cost of the end product formed. Suitable flame retardant additives for use in the various embodiments of the flame retardant polymer composition include, but are not limited to, halogen-based, phosphorous-based, nitrogen-based and sulfur-based flame retardant compositions. These compositions include brominated diphenyl oxides, chlorinated phosphate ester, triaryl phosphate esters, sodium antimonates and other suitable flame retardant compositions. Other ingredients that can be added to formulate the polymer composition include blowing agents, fibrous reinforcing materials, pigments, mold release agents, thermoplastic and elastomeric polymeric materials, shrink control agents, wetting agents, antifoam agents, surface treatment agents, and thickeners.

As described above, the polymer material may be contacted with a precursor of the metal oxide sol, such as the metal oxide precursor, which then is processed to form the metal oxide sol nano-clusters in situ in the polymer material, resulting in a prepolymer mixture. The prepolymer mixture then may be polymerized, cure heated or cooled to form the polymer compositions of the present invention. In embodiments involving a thermosetting resin, the metal oxide sol, or precursors thereof, and optionally various other ingredients, are combined with the thermosetting resin prior to curing. The prepolymer mixture of the thermosetting resin and the formed metal oxide sol are preferably mixed followed by curing (polymerization and/or crosslinking). In some embodiments, the thermosetting resin can be B-staged (partially cured) before it is combined with the metal oxide sol, or precursors thereof, to form a prepolymer mixture. Curing is accomplished in any manner consistent with the particular characteristics of the thermosetting resin. For example, curing may be initiated by light such as UV light or visible light, a change in temperature such as heating or cooling, exposure to a curing initiator such as oxygen, or any other means known to those skilled in the art.

In any of these embodiments, the liquid phase of the phosphorous-containing metal oxide sol can be removed from a prepolymer mixture prior to curing. In yet another embodiment, the liquid phase of the metal oxide sol may be removed subsequent to curing, polymerization or heating the prepolymer mixture.

In embodiments where the polymer material is a thermoplastic resin, the metal oxide sol, or precursors thereof, and optionally other ingredients, are combined with the thermoplastic resin prior to polymerization or after polymerization of the resin but when the thermoplastic resin is in condition to be combined with the metal oxide sol, or precursors thereof, to form a prepolymer mixture. For example, in embodiments where a thermoplastic resin is polymerized, the metal oxide sol, or a precursor thereof, may be combined with the resin after the thermoplastic resin is heated so that it is in the molten state or the liquid state. In this embodiment, once the metal oxide sol is formed, in situ in the polymer material, the polymer composition according to the present invention is made by simply cooling/solidifying the prepolymer mixture of the molten or liquid thermoplastic resin and the metal oxide sol. In another embodiment, the metal oxide sol, or a precursor thereof, is combined with the thermoplastic resin (prior to polymerization) to form a prepolymer mixture. Once the metal oxide sol is formed, in situ in the polymer material, the prepolymer mixture is polymerized to form the polymer composition of the present invention. In any of these embodiments, the liquid phase of the metal oxide sol may be removed prior to polymerization, heating, and/or cooling (such as by evaporation), prior to combining the metal oxide sol and thermoplastic resin, or after polymerization, heating and/or cooling.

The prepolymer mixtures containing the polymer materials and the phosphorous-containing nano-clusters (made with phosphorous-containing metal oxide sols) may be processed using conventional techniques associated with processing the polymer material. For example, when the prepolymer mixture is a particular curable resin system, the prepolymer mixture is cured and processed in a conventional manner associated with the particular curable resin system.

The following example illustrates a method, in accordance with one exemplary embodiment of the invention, for making a flame retardant polymer composition of the present invention, in particular, a flame retardant epoxy composition. Titanium isopropoxide, a metal oxide precursor, is added to methoxyethanol, a solvent, and mixed for a suitable period, preferably approximately ten minutes. Any convenient method of mixing may be used to formulate the flame retardant polymer composition of the present invention, such as, for example, rapid stirring with a mechanical stirrer or agitation with a mechanical agitator. Diphenylphosphinic acid is added to the methoxyethanol mixture and mixed for a suitable period, preferably about thirty minutes, at a temperature of about 50°C to form a phosphinate-chelated metal oxide precursor. The mixture is then cooled to about room temperature. An epoxy polymer precursor, Araldite MY720 produced by Vantico, Inc. of Los Angeles, California, then is added along with additional methoxyethanol, and the combination is suitably mixed to form a homogenous solution. De-ionized water is added to the combination, which is mixed for a suitable period, preferably about thirty minutes, at about room temperature to at least partially hydrolyze the phosphinate-chelated metal oxide precursor and complete production of the metal oxide sol. The at least partially hydrolyzed phosphinate-chelated metal oxide precursor prepolymer mixture is then combined with 4,4' - diaminodiphenyl sulfone (DDS), a curing agent, and mixed until the DDS dissolves into the solution.

The volatile materials then may be removed from the polymer composition at a suitable temperature, preferably approximately 60°C, using a vacuum pump until bubbles substantially cease to be liberated from the mixture. The mixture additionally may be heated, preferably to a temperature of approximately 90°C, to ensure adequate removal of the volatile materials. It will be appreciated that, in another embodiment of the invention, the volatile materials may be removed from the mixture before the DDS is added.

In an exemplary embodiment of the flame retardant polymer composition of the present invention, before removal of the volatile materials, the polymer/metal oxide sol mixture, the formation of which is described above, may have the following composition set forth in Table 1, with each of the components set forth in weight percent of the total polymer/metal oxide sol mixture:

**TABLE 1**

| Component | wt. % |
|---|---|
| Titanium isopropoxide | 3.0 |
| Diphenylphosphinic acid | 2.3 |
| Methoxyethanol | 41.4 |
| DI Water | 0.7 |
| Araldite MY720 | 36.5 |
| 4,4' - diaminodiphenyl sulfone | 16.1 |
| Total | 100% |

After removal of the volatiles, the above-described polymer/metal oxide sol mixture may have the following composition set forth in Table 2, with each of the components set forth in weight percent of the total polymer/metal oxide sol mixture:

**TABLE 2**

| Component | wt. % |
|---|---|
| Metal oxide sol | 5.0% |
| Araldite MY720 and DDS | 95.0% |
| Total | 100.0% |

The above example illustrates a flame retardant polymer composition having a metal oxide sol concentration, after the volatile materials have been removed, of about 5.0% by weight. However, it will be understood that the invention is not limited to this concentration of metal oxide sol but may comprise any suitable concentration of metal oxide sol. For example, in one embodiment of the invention, the concentration of metal oxide sol after the volatile materials have been removed may be in the range of 0.1% to 50.0% by weight. In a preferred embodiment of the invention, the concentration of metal oxide sol after the volatile materials have been removed may be in the range of 0.5% to 30.0% by weight. In a more preferred embodiment of the invention, the concentration of metal oxide sol after the volatile materials have been removed may be in the range of 1.0% to 10.0% by weight.

While the above example illustrates the formulation of a flame retardant epoxy polymer composition in accordance with one embodiment of the present invention, it will be understood that the present invention is not limited to the components or the weight percents of the components of the example. Rather, any other suitable flame retardant polymer composition may be formulated in accordance with the present invention. For example, while this embodiment utilized a titanium-based metal oxide precursor, different metal oxide precursors may be used to fabricate the polymer composition. This embodiment also utilizes a polymer/metal oxide sol mixture having 3.0% by weight of metal oxide precursor. However, it will be appreciated that any suitable amount of metal oxide precursor may be used. In addition, any other suitable polymerizable material in any suitable amount may be used. Further, while the epoxy polymer composition comprised about 5.0% metal oxide sol (after removal of the volatile materials), polymer compositions in accordance with the various embodiments of the present invention may be formulated to have more or less metal oxide sol.

Table 3 illustrates the results of a test of the flame retardant properties of the above-described epoxy polymer composition formulated in accordance with an exemplary embodiment of the present invention. Three samples were tested using a sixty second vertical flammability test. Pursuant to this test, three samples approximately 2.54 cm (one inch) wide and 15.2 cm (six inches) long were utilized. The first sample, Sample 1, was a conventional epoxy polymer comparative sample formulated from epoxy resin and DDS. The second and third samples, Sample 2 and Sample 3, were fabricated using the titanium oxide sol/epoxy polymer composition described above and referenced in Tables 1 arid 2. Each sample was hung vertically over a Bunsen burner, which was ignited and adjusted to have a 2.54 cm (one inch) flame. The bottom edges of the samples were exposed to the flame for approximately sixty seconds after which the burner was turned off. The samples were then analyzed to determined how long the samples burned before self-extinguishing, to determine the length of the bum along the sample, and to determine how long drips from the sample burned before extinguishing. To pass the test, the samples were required to self-extinguish within no more than fifteen seconds, and the drips, if any, from the samples were required to extinguish within no more than three seconds. The results of the flammability test are set forth in Table 3:

**TABLE 3**

| Sample | Extinguish Time (sec) | Burn Length cm (inches) | Drip Extinguish Time (sec) | Result |
|---|---|---|---|---|
| To Pass | 15 | 15.2 (6) | 3 | |
| #1 | 167.8 | 15.2 (6) | 6 | Failed |
| #2 | 0 | 3.0 (1.2) | No Drip | Passed |
| #3 | 1.4 | 2.3 (0.9) | No Drip | Passed |

As illustrated above, the samples prepared using an embodiment of the phosphorous-containing metal oxide sol/polymer composition of the present invention exhibited superior flame resistant properties to the epoxy composition formulated without the phosphorous-containing metal oxide sol. The metal oxide sol/polymer composition exhibited the superior flame resistant properties without the use of conventional flame retardant additives, which, as described above, may adversely affect the mechanical properties of the resulting polymer composition.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing the exemplary embodiment or exemplary embodiments. For example, while the above-described method was used to form a metal oxide sol in epoxy resin, any suitable polymer material may be used. In addition, while the metal oxide sol was formed with a titanium-based metal oxide precursor, any suitable metal oxide precursor may be used. Further, while the metal oxide sol of the exemplary method was formed in situ in the polymer material, the metal oxide sol could have been formed first and then combined with the polymer material, forming a prepolymer mixture that could then be polymerized or otherwise solidified.

## Claims

1. A process for making a flame retardant polymer composition, the process comprising:
contacting a metal oxide precursor with a source of organophosphinate anions to form a phosphinate-chelated metal oxide precursor;
contacting said phosphinate-chelated metal oxide precursor with a polymer material;
at least partially hydrolyzing said phosphinate-chelated metal oxide precursor to form at least partially hydrolyzed phosphinate-chelated metal oxide precursor monomers;
permitting said at least partially hydrolyzed, phosphinate-chelated metal oxide precursor monomers to polycondense to form a phosphorous-containing metal oxide sol; and
at least one of polymerizing and solidifying said polymer material.

2. The process for making a flame retardant polymer composition of claim 1, wherein said phosphorous-containing metal oxide sol comprises a liquid and a polycondensation product of said at least partially hydrolyzed phosphinate-chelated metal oxide precursor monomers, and the process further comprises the step of removing said liquid before the step of at least one of polymerizing and solidifying said polymer material.

3. The process for making a flame retardant polymer composition of claim 1, wherein said phosphorous-containing metal oxide sol comprises a liquid and a polycondensation product of said at least partially hydrolyzed phosphinate-chelated metal oxide precursor monomers, and the process further comprises the step of removing said liquid after the step of at least one of polymerizing and solidifying said polymer material.

4. The process for making a flame retardant polymer composition of claim 1, wherein the step of contacting a metal oxide precursor with a source of organophosphinate anions comprises the step of selecting said metal oxide precursor from the group of metal oxide precursors comprising at least one of a transition metal, an alkaline earth metal and a metallic element selected from Groups 3A, 4A and 5A of the periodic table of elements.

5. The process for making a flame retardant polymer composition of claim 4, wherein the step of selecting said metal oxide precursor comprises selecting said metal oxide precursor from the group of metal oxide precursors comprising at least one of aluminum, antimony, bismuth, calcium, chromium, magnesium, tin, titanium, zinc and zirconium.

6. The process for making a flame retardant polymer composition of claim 1, the process further comprising the step of contacting said phosphorous-containing metal oxide sol with at least one ingredient selected from the group comprising a flame retardant additive, a blowing agent, a fibrous reinforcing material, a pigment, a mold release agent, a thermoplastic polymeric material, an elastomeric polymeric material, a shrink control agent, a wetting agent an antifoam agent, a surface treatment agent, and a thickener.

7. The process for making a flame retardant polymer composition of claim 1, wherein the step of contacting a metal oxide precursor with a source of organophosphinic anions comprises the step of selecting said source of organophosphinic anions from the group of materials that derive anions having the formula: 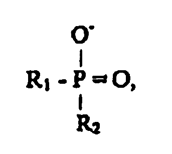 wherein R₁ and R₂ are selected from the group of moieties comprising an alkyl, an aryl, an alkoxy and an aryloxy moiety.

8. The process for making a flame retardant polymer composition of claim 1, wherein the step of contacting a metal oxide precursor with a source of organophosphinate anions comprises the step of selecting said source of organophosphinate anions from the group comprising phosphinic acids.

9. The process for making a flame retardant polymer composition of claim 8, wherein the step of contacting a metal oxide precursor with a source of organophosphinate anions comprises contacting said metal oxide precursor with diphenylphosphinic acid.

10. The process for making a flame retardant polymer composition of claim 1, wherein the step of at least partially hydrolyzing said phosphinate-chelated metal oxide precursor comprises the step of contacting said phospbinate-chelated metal oxide precursor with a hydrolyzing agent.

11. The process for making a flame retardant polymer composition of claim 10, wherein the step of contacting said phosphinate-chelated metal oxide precursor with a hydrolyzing agent comprises contacting said phosphinate-chelated metal oxide precursor with de-ionized water.

12. The process for making a flame retardant polymer composition of claim 1, wherein the step of contacting said phosphinate-chelated metal oxide precursor with a polymer material comprises contacting said phosphinate-chelated metal oxide precursor with a polymer material selected from the group comprising at least one of an alkyd resin, a vinyl ester resin, a polyurethane resin, an epoxy resin, a phenol resin, an urea-aldehyde resin, a polyvinyl aromatic, a maleimide resin, a polyvinyl halide resin, a polyolefin, a polyorganosiloxane, an amino resin, a polyamide, a polyimide, a polyetherimide, a polyphenylene sulfide resin, an aromatic polysulfone, a polyamideimide, a polyesterimide, a polyesteramideimide, a polyvinyl acetal, a fluorinated polymer, and a polycarbonate.

13. The process for making a flame retardant polymer composition of claim 1, further comprising the step of contacting said metal oxide precursor with a solvent before the step of contacting said metal oxide precursor with a source of organophosphinate anions.

14. The process for making a flame retardant polymer composition of claim 13, wherein the step of contacting said metal oxide precursor with a solvent comprises the step of selecting said solvent from the group comprising water, alcohols, and glycols.

## Patentansprüche

1. Verfahren zur Herstellung einer flammhemmenden Polymerzusammensetzung, wobei das Verfahren umfasst:
- Inkontaktbringen eines Metalloxidvorläufers mit einer Quelle für Organophosphinat-Anionen, um einen Phosphinat-chelatierten Metalloxidvorläufer zu bilden,
- Inkontaktbringen dieses Phosphinat-chelatierten Metalloxidvorläufers mit einem Polymermaterial;
- mindestens teilweises Hydrolysieren des Phosphinat-chelatierten Metalloxidvorläufers, um mindestens teilweise hydrolysierte Phosphinat-chelatierte Metalloxidvorläufer-Monomere zu bilden;
- Ermöglichen der Polykondensation der mindestens teilweise hydrolysierten, Phosphinat-chelatierten Metalloxidvorläufer-Monomere, um ein phosphorhaltiges Metalloxidsol zu bilden; und
- Polymerisieren und/oder Verfestigen des Gemischs.

2. Verfahren zur Herstellung einer flammhemmenden Polymerzusammensetzung nach Anspruch 1, wobei das phosphorhaltige Metalloxidsol eine Flüssigkeit und ein Polykondensationsprodukt aus den mindestens teilweise hydrolysierten Phosphinat-chelatierten Metalloxidvorläufer-Monomeren umfasst und wobei das Verfahren weiterhin den Schritt des Entfernens der Flüssigkeit vor dem Schritt des Polymerisieren und/oder Verfestigens des Gemischs umfasst.

3. Verfahren zur Herstellung einer flammhemmenden Polymerzusammensetzung nach Anspruch 1, wobei das phosphorhaltige Metalloxidsol eine Flüssigkeit und ein Polykondensationsprodukt aus den mindestens teilweise hydrolysierten Phosphinat-chelatierten Metalloxidvorläufer-Monomere umfasst und wobei das Verfahren weiterhin den Schritt des Entfernens der Flüssigkeit nach dem Schritt des Polymerisieren und/oder Verfestigens des Gemischs umfasst.

4. Verfahren zur Herstellung einer flammhemmenden Polymerzusammensetzung nach Anspruch 1, wobei der Schritt des Inkontaktbringens eines Metalloxidvorläufers mit einer Quelle für Organophosphinat-Anionen den Schritt des Auswählens des Metalloxidvorläufers aus der Metalloxidvorläufer-Gruppe umfasst, die mindestens eines von einem Übergangsmetall, einem Erdalkalimetall und einem metallischen Element, das aus den Gruppen 3A, 4A und 5A des Periodensystems der Elemente ausgewählt wird, umfasst.

5. Verfahren zur Herstellung einer flammhemmenden Polymerzusammensetzung nach Anspruch 4, wobei der Schritt des Auswählens des Metalloxidvorläufers das Auswählen des Metalloxidvorläufers aus der Metalloxidvorläufer-Gruppe umfasst, die mindestens eines von Aluminium, Antimon, Bismut, Calcium, Chrom, Magnesium, Zinn, Titan, Zink und Zirconium umfasst.

6. Verfahren zur Herstellung einer flammhemmenden Polymerzusammensetzung nach Anspruch 1, wobei das Verfahren weiterhin den Schritt des Inkontaktbringens des phosphorhaltigen Metalloxidsols mit mindestens einem Bestandteil umfasst, der aus der Gruppe ausgewählt wird, die ein flammhemmendes Additiv, ein Treibmittel, ein faserförmiges Verstärkungsmaterial, ein Pigment, ein Entformungsmittel, ein thermoplastisches Polymermaterial, ein elastomeres Polymermaterial, ein Schrumpfkontrollmittel, ein Benetzungsmittel, ein Antischaummittel, ein Oberflächenbehandlungsmittel und ein Verdickungsmittel umfasst.

7. Verfahren zur Herstellung einer flammhemmenden Polymerzusammensetzung nach Anspruch 1, wobei der Schritt des Inkontaktbringens eines Metalloxidvorläufers mit einer Quelle für Organophosphin-Anionen das Auswählen der Quelle für Organophosphin-Anionen aus der Gruppe von Materialien umfasst, die Anionen liefern, die der Formel 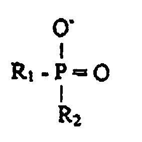 entsprechen, worin R₁ und R₂ aus der Gruppe von Resten ausgewählt werden, die die Alkylreste, die Arylreste, die Alkoxyreste und die Aryloxyreste umfasst.

8. Verfahren zur Herstellung einer flammhemmenden Polymerzusammensetzung nach Anspruch 1, wobei der Schritt des Inkontaktbringens eines Metalloxidvorläufers mit einer Quelle für Organophosphinat-Anionen den Schritt des Auswählens dieser Quelle für Organophosphinat-Anionen aus der Gruppe umfasst, die die Phosphinsäuren umfasst.

9. Verfahren zur Herstellung einer flammhemmenden Polymerzusammensetzung nach Anspruch 8, wobei der Schritt des Inkontaktbringens eines Metalloxidvorläufers mit einer Quelle für Organophosphinat-Anionen das Inkontaktbringen des Metalloxidvorläufers mit Diphenylphosphinsäure umfasst.

10. Verfahren zur Herstellung einer flammhemmenden Polymerzusammensetzung nach Anspruch 1, wobei der Schritt des mindestens teilweise Hydrolysierens des Phosphinat-chelatierten Metalloxidvorläufers den Schritt des Inkontaktbringens des Phosphinat-chelatierten Metalloxidvorläufers mit einem Hydrolysierungsmittel umfasst.

11. Verfahren zur Herstellung einer flammhemmenden Polymerzusammensetzung nach Anspruch 10, wobei der Schritt des Inkontaktbringens des Phosphinat-chelatierten Metalloxidvorläufers mit einem Hydrolysierungsmittel das Inkontaktbringen des Phosphinat-chelatierten Metalloxidvorläufers mit entionisiertem Wasser umfasst.

12. Verfahren zur Herstellung einer flammhemmenden Polymerzusammensetzung nach Anspruch 1, wobei der Schritt des Inkontaktbringens des Phosphinat-chelatierten Metalloxidvorläufers mit einem Polymermaterial das Inkontaktbringen des Phosphinat-chelatierten Metalloxidvorläufers mit einem Polymermaterial umfasst, das aus der Gruppe ausgewählt wird, die mindestens eines von einem Alkydharz, einem Vinylesterharz, einem Polyurethanharz, einem Epoxidharz, einem Phenolharz, einem Harnstoffaldehydharz, einem Polyvinylaromaten, einem Maleimidharz, einem Polyvinylhalogenidharz, einem Polyolefin, einem Polyorganosiloxan, einem Aminoharz, einem Polyamid, einem Polyimid, einem Polyetherimid, einem Polyphenylsulfidharz, einem aromatischen Polysulfon, einem Polyamidimid, einem Polyesterimid, einem Polyesteramidimid, einem Polyvinylacetal, einem fluorierten Polymer und einem Polycarbonat umfasst.

13. Verfahren zur Herstellung einer flammhemmenden Polymerzusammensetzung nach Anspruch 1, das weiterhin den Schritt des Inkontaktbringens des Metalloxidvorläufers mit einem Lösemittel vor dem Schritt des Inkontaktbringens des Metalloxidvorläufers mit einer Quelle für Organophosphinat-Anionen umfasst.

14. Verfahren zur Herstellung einer flammhemmenden Polymerzusammensetzung nach Anspruch 13, wobei der Schritt des Inkontaktbringens des Metalloxidvorläufers mit einem Lösemittel den Schritt des Auswählens des Lösemittels aus der Gruppe umfasst, die Wasser, Alkohole und Glycole umfasst.

## Revendications

1. Procédé de fabrication d'une composition polymère ignifuge, le procédé comprenant:
la mise en contact d'un précurseur d'oxyde métallique avec une source d'anions organophosphinate pour former un précurseur d'oxyde métallique chélaté aux phosphinates;
la mise en contact dudit précurseur d'oxyde métallique chélaté aux phosphinates avec un matériau polymère; l'hydrolyse au moins partielle dudit précurseur métallique chélaté aux phosphinates pour former des monomères de précurseur d'oxyde métallique chélaté aux phosphinates au moins partiellement hydrolysé;
la possibilité pour lesdits monomères de précurseur d'oxyde métallique chélaté aux phosphinates au moins partiellement hydrolysé de se polycondenser pour former un sol d'oxyde métallique phosphoré;
au moins l'une d'une polymérisation et d'une solidification dudit matériau polymère.

2. Procédé de fabrication d'une composition polymère ignifuge selon la revendication 1, dans lequel ledit sol d'oxyde métallique phosphoré comprend un liquide et un produit de polycondensation desdits monomères de précurseur d'oxyde métallique chélaté aux phosphinates au moins partiellement hydrolysé et le procédé comprend en outre l'étape consistant à éliminer ledit liquide avant l'étape consistant à effectuer au moins l'une d'une polymérisation et d'une solidification dudit matériau polymère.

3. Procédé de fabrication d'une composition polymère ignifuge selon la revendication 1, dans lequel ledit sol d'oxyde métallique phosphoré comprend un liquide et un produit de polycondensation desdits monomères de précurseur d'oxyde métallique chélaté aux phosphinates au moins partiellement hydrolysé et le procédé comprend en outre l'étape consistant à éliminer ledit liquide après l'étape consistant à effectuer au moins l'une d'une polymérisation et d'une solidification dudit matériau polymère.

4. Procédé de fabrication d'une composition polymère ignifuge selon la revendication 1, dans lequel l'étape de mise en contact d'un précurseur d'oxyde métallique avec une source d'anions organophosphinate comprend l'étape consistant à sélectionner ledit précurseur d'oxyde métallique dans le groupe de précurseurs d'oxyde métallique comprenant au moins l'un d'un métal de transition, un métal alcalino-terreux et un élément métallique choisi dans les groupes 3A, 4A et 5A du tableau périodique des éléments.

5. Procédé de fabrication d'une composition polymère ignifuge selon la revendication 4, dans lequel l'étape de sélection dudit précurseur d'oxyde métallique comprend la sélection dudit précurseur d'oxyde métallique dans le groupe de précurseurs d'oxyde métallique comprenant au moins l'un de l'aluminium, l'antimoine, le bismuth, le calcium, le chrome, le magnésium, l'étain, le titane, le zinc et le zirconium.

6. Procédé de fabrication d'une composition polymère ignifuge selon la revendication 1, le procédé comprenant en outre l'étape consistant à mettre en contact ledit sol d'oxyde métallique phosphoré avec au moins un ingrédient choisi dans le groupe comprenant un additif ignifuge, un agent d'expansion, un matériau de renforcement fibreux, un pigment, un agent de démoulage, un matériau polymère thermoplastique, un matériau polymère élastomère, un agent de régulation du retrait, un agent mouillant, un anti-mousse, un agent de traitement de surface et un épaississant.

7. Procédé de fabrication d'une composition polymère ignifuge selon la revendication 1, dans lequel l'étape consistant à mettre en contact un précurseur d'oxyde métallique avec une source d'anions organophosphiniques comprend l'étape consistant à sélectionner ladite source d'anions organophosphiniques dans le groupe de matériaux qui dérivent des anions répondant à la formule: 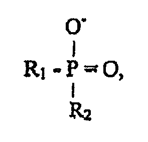 dans laquelle R₁ et R₂ sont choisis dans le groupe de fractions comprenant une fraction alkyle, aryle, alcoxy et aryloxy.

8. Procédé de fabrication d'une composition polymère ignifuge selon la revendication 1, dans lequel l'étape de mise en contact d'un précurseur d'oxyde métallique avec une source d'anions organophosphinate comprend l'étape de sélection de ladite source d'anions organophosphinate dans le groupe comprenant les acides phosphiniques.

9. Procédé de fabrication d'une composition polymère ignifuge selon la revendication 8, dans lequel l'étape de mise en contact d'un précurseur d'oxyde métallique avec une source d'anions organophosphinate comprend la mise en contact dudit précurseur d'oxyde métallique avec de l'acide diphénylphosphinique.

10. Procédé de fabrication d'une composition polymère ignifuge selon la revendication 1, dans lequel l'étape consistant à hydrolyser au moins partiellement ledit précurseur d'oxyde métallique chélaté aux phosphinates comprend l'étape consistant à mettre en contact ledit précurseur d'oxyde métallique chélaté aux phosphinates avec un agent de désagrégation.

11. Procédé de fabrication d'une composition polymère ignifuge selon la revendication 10, dans lequel l'étape de mise en contact dudit précurseur d'oxyde métallique avec un agent de désagrégation comprend la mise en contact dudit précurseur d'oxyde métallique chélaté aux phosphinates avec de l'eau désionisée.

12. Procédé de fabrication d'une composition polymère ignifuge selon la revendication 1, dans lequel l'étape de mise en contact dudit précurseur d'oxyde métallique chélaté aux phosphinates avec un matériau polymère comprend la mise en contact dudit précurseur d'oxyde métallique chélaté aux phosphinates avec un matériau polymère sélectionné dans le groupe comprenant au moins l'un d'une résine alkyde, une résine ester de vinyle, une résine poly(uréthane), une résine époxy, une résine phénolique, une résine urée-aldéhyde, un poly(vinyle) aromatique, une résine maléimide, une résine poly(halogénure de vinyle), une poly(oléfine), un poly(organosiloxane), une résine aminique, un poly(amide), un poly(imide), un poly(étherimide), une résine poly(sulfure de phénylène), une poly(sulfone) aromatique, un poly(amideimide), un poly(esterimide), un poly(esteramideimide), un poly(vinyl acétal), un polymère fluoré et un poly(carbonate).

13. Procédé de fabrication d'une composition polymère ignifuge selon la revendication 1, comprenant en outre l'étape consistant à mettre en contact ledit précurseur d'oxyde métallique avec un solvant avant l'étape de mise en contact dudit précurseur d'oxyde métallique avec une source d'anions organophosphinate.

14. Procédé de fabrication d'une composition polymère ignifuge selon la revendication 13, dans lequel l'étape de mise en contact dudit précurseur d'oxyde métallique avec un solvant comprend l'étape consistant à sélectionner ledit solvant dans le groupe comprenant l'eau, les alcools et les glycols.
